# EUROPEAN PATENT SPECIFICATION

(11) **EP 3 526 873 B1**
(45) Date of publication and mention of the grant of the patent: **03.12.2025**
(21) Application number: 17783483.5
(22) Date of filing: 11.10.2017
(51) Int. Cl.: H02J 3/14, H02J 3/38, H02J 13/00

(54) **METHOD FOR OPERATING AN ELECTRICAL POWER SUPPLY GRID, COMPUTER PROGRAM, POWER ELECTRONICS DEVICE AND POWER SUPPLY GRID**
METHOD FOR OPERATING AN ELECTRICAL POWER SUPPLY GRID, COMPUTER PROGRAM, POWER ELECTRONICS DEVICE AND POWER SUPPLY GRID
PROCÉDÉ DE COMMANDE D'UN RÉSEAU D'ALIMENTATION ÉLECTRIQUE, PROGRAMME INFORMATIQUE, DISPOSITIF ÉLECTRONIQUE DE PUISSANCE ET RÉSEAU D'ALIMENTATION ÉLECTRIQUE

(30) Priority: 12.10.2016 DE 102016119422
(43) Date of publication of application: 21.08.2019
(73) Proprietor: Karlsruher Institut für Technologie, 76131 Karlsruhe (DE)
(72) Inventor: DE CARNE, Giovanni, 24106 Kiel (DE); BUTICCHI, Giampaolo, 315100 Ningbo (CN); LISERRE, Marco, 24248 Mönkeberg (DE); VOURNAS, Costas, 15669 Papagou (GR)
(74) Representative: Kröncke, Rolf
(86) International application number: PCT/EP2017/075935
(87) International publication number: WO 2018/069390

(56) References cited:
- US-A1- 2015 280 629
- US-A1- 2015 280 629
- US-A1- 2016 111 883
- US-A1- 2016 111 883
- GIOVANNI DE CARNE ET AL: "On-Line Load Sensitivity Identification in LV Distribution Grids", IEEE TRANSACTIONS ON POWER SYSTEMS., vol. 32, no. 2, 1 March 2017 (2017-03-01), US, pages 1570 - 1571, XP055718797, ISSN: 0885-8950, DOI: 10.1109/TPWRS.2016.2581979

## Description

The invention relates to a method for operating an electrical power supply grid as claimed in claim 1. The invention also relates to a computer program for carrying out a method of this kind, to a power electronics device of a power supply grid, and also to a power supply grid comprising a power electronics device of this kind.

In general, the invention relates to the field of electrical power supply by means of electrical power supply grids. Owing to electrical loads being connected and disconnected and also due to different feed-in behavior of electrical energy sources (generators), fluctuations in operating parameters of the power supply grid, for example the voltage and/or the frequency, over time can occur in an electrical power supply grid. In particular, fluctuations of this kind can occur suddenly on the supply side due to the increase in electrical power being fed in from renewable energy sources, for example solar cells and wind power plants. In accordance with known approaches, attempts have been made to observe the behavior of operating parameters of the power supply grid in the long term and to derive predictive control strategies therefrom. Naturally, approaches of this kind cannot adequately reproduce the actual, instantaneous conditions. In addition, long-term data detection and also the evaluation of the data by complex mathematical methods is relatively complicated. There are also approaches for load modeling, for example CN 101789598 A1.

Further approaches are disclosed in:
ZOU, Z. X.; BUTICCHI, G.; LISERRE, M.: Control and communication in the Smart Transformer-fed grid. In: IEEE 21st International Conference on Emerging Technologies and Factory Automation (ETFA), Berlin, 06.-09.09.2016.
DE CARNE, G.; LISERRE, M.; VOURNAS, C.: On-Line Load Sensitivity Identification in LV Distribution Grids. In: IEEE Transaction on Power Systems, Vol. 32, Issue 2, March 2017, pages 1570-1571, publ. 16 June 2017
In US 2016/0111883 A1 and US 2015/0280629 A1 further methods and apparatuses for feeding electrical power from a wind energy system into an electric power supply system are disclosed.

The invention is based on the object of proposing a more effective and more practical method for operating an electrical power supply grid. Furthermore, a computer program which is suitable for this purpose, a power electronics device and also a power supply grid shall be proposed. As claimed in claim 1, this object is achieved by a method for operating an electrical power supply grid, comprising all the features of independent claim 1, in particular the following steps which are executed on a computer of at least one power electronics device which is connected to the power supply grid:
a) carrying out identification of the load behavior of electrical loads, which are connected to the power supply grid, during ongoing operation of the power supply grid by deliberately feeding in one or more interference signals by means of the at least one power electronics device which is connected to the power supply grid,
b) measuring electrical characteristic data of loads which are connected to the power supply grid,
c) continuously determining at least one load sensitivity variable on the basis of the measured electrical characteristic data and the interference signals which have been fed in, wherein the at least one load sensitivity variable is a variable which indicates how sensitively the power supply grid reacts to voltage and/or frequency interference signals, such that the load behavior of electrical loads which are connected to the power supply grid can be determined permanently and in real-time during ongoing operation of the power supply grid in a deliberate manner,
d) influencing at least one operating parameter of the power supply grid on the basis of the determined load sensitivity variable,
   characterized in that
   one or both of the following ancillary service functions is/are provided in the power supply grid by means of a power electronics device, which is connected to the power supply grid, based on the ascertained load sensitivity variable:
e) influencing the frequency of the power supply grid depending on the voltage of the power supply grid,
f) influencing the voltage of the power supply grid depending on the frequency of the power supply grid.

Here, steps a) to c) can be executed repeatedly for continuously determining the at least one load sensitivity variable. In particular, the entire method comprising steps a) to d) can be repeated in the manner of a control loop. The method can be repeatedly executed, for example, with a repetition rate in the range of from one to several minutes, for example 1 to 15 minutes, in particular 5 minutes.

Determining the at least one load sensitivity variable can be done on the basis of the measured electrical characteristic data of an interference signal which has been fed in or on the basis of a plurality of interference signals which have been fed in. Improved accuracy when determining the load sensitivity variable can be achieved by evaluating the reaction to a plurality of interference signals.

The load sensitivity variable can be, for example, a voltage sensitivity which indicates how sensitively the power supply grid with the connected electrical loads reacts to voltage interference signals, and/or a frequency sensitivity which indicates how sensitively the power supply grid with its connected electrical loads reacts to a frequency interference signal. Therefore, in particular, a first load sensitivity variable in the form of a frequency sensitivity and a second load sensitivity variable in the form of a voltage sensitivity can be determined, and the at least one operating parameter of the power supply grid can be influenced on the basis of the ascertained frequency sensitivity and/or voltage sensitivity.

The power electronics device can have, in particular, electronic power components, such as power transistors.

The invention has the advantage that the load behavior of electrical loads which are connected to the power supply grid can be determined permanently and in real-time during ongoing operation of the power supply grid in a deliberate manner, specifically by intentionally feeding in at least one interference signal. Very effective stabilization of the power supply grid, which stabilization is less complicated than previous data detection operations, can be carried out on the basis of instantaneous data of this kind.

According to an advantageous development of the invention, it is proposed that the method is carried out in real time, and the determination of the load sensitivity variable is updated during ongoing operation of the power supply grid. In this way, the load sensitivity variable is always at an instantaneous level, and therefore the at least one operating parameter is influenced on the basis of the instantaneous behavior of the power supply grid and the connected loads of said power supply grid.

According to an advantageous development of the invention, it is proposed that the interference signal is a voltage interference signal, by way of which the instantaneous voltage of the power supply grid is changed, and/or a frequency interference signal, by way of which the frequency of the power supply grid is changed. In this case, the voltage interference signal can be conducted through the power electronics device, for example by actively or reactively feeding in power, for example by converter-based distributed interference signal generation, a static compensator or electrical battery storage systems. The voltage interference signal or the frequency interference signal can also be generated, for example, by the setpoint variable of the voltage or the frequency of the power supply grid being directly influenced, for example by means of HVDC (High Voltage Direct Current) transmission, smart transformers, back-to-back converters.

The interference signal can also be a power interference signal by way of which the instantaneous reactive power and/or the active power of the power supply grid are/is changed. In general, the interference signal can have any desired curve form, wherein it is advantageous to avoid sudden changes. The interference signal can have, for example, a triangular shape or a trapezoidal shape over time.

According to an advantageous development of the invention, it is proposed that the interference signal is repeatedly generated at regular and/or irregular intervals. The interference signal can be generated, for example, in synchronism with the repetition rate at which the method of claim 1 is carried out.

According to an advantageous development of the invention, it is proposed that the influenced operating parameter of the power supply grid is the voltage and/or the frequency of the power supply grid and/or the power consumption by loads which are connected to the power supply grid and/or the power of connected generators, which power has been fed into the power supply grid. In this way, it is possible to react to fluctuations in operating parameters of the power supply grid in a particularly smart manner, without individual loads having to be completely disconnected. The reliability and availability of the power supply grid is improved as a result. The voltage can be adjusted in a range of +/- 5% of the setpoint voltage. The frequency can be adjusted in a range of +/- 5% of the setpoint frequency. These values are meant as examples, generally the values can be chosen freely, e.g. +/- 10%, +/- 20%.

Generators are to be understood to be any kind of electrical energy sources which feed electrical energy into the power supply grid, for example synchronous machines, but also solar cells and wind power plants.

According to an advantageous development of the invention, it is proposed that the function of the power supply grid and/or the at least one operating parameter and/or other operating parameters of the power supply grid are/is stabilized at a respective setpoint value by influencing the at least one operating parameter of the power supply grid on the basis of the ascertained load sensitivity variable. Therefore, the method according to the invention can be used to ensure the stability of the power supply grid in a less complicated manner. In this case, stabilization can be carried out in the sense of regulation to the respective setpoint value.

According to the invention, it is proposed that all of the following ancillary service functions are provided in the power supply grid by means of a power electronics device, which is connected to the power supply grid, based on the ascertained load sensitivity variable:
a) changing the power consumption by connected loads of the power supply grid by adjusting the voltage of the power supply grid up to a predetermined limit value,
b) changing the power of connected generators, which power has been fed into the power supply grid, by adjusting the voltage of the power supply grid up to a predetermined limit value,
c) changing the power consumption by connected loads of the power supply grid by adjusting the frequency of the power supply grid up to a predetermined limit value,
d) changing the power of connected generators, which power has been fed into the power supply grid, by adjusting the frequency of the power supply grid up to a predetermined limit value,
g) temporarily influencing at least one operating parameter of the power supply grid for the purpose of assisting the start-up phase or switch-off phase of at least one generator which is connected to the power supply grid.

In this way, the method according to the invention can be used to realize an advantageous additional functionality in the power supply grid, without additional expenditure on hardware (over and above the power electronics device required in any case) being required for this purpose.

According to an advantageous development of the invention, it is proposed that
a) the electrical power supply grid is a medium voltage grid or high voltage grid, in particular a grid being or comprising a direct current (DC) grid,
b) the DC grid can be a HVDC transmission grid between different alternating current (AC) grids.

The information deriving from the load active power sensitivity to voltage can be used to provide ancillary services both in the DC and AC side:
c) Being able to influence the load absorption in the DC grid, the control point can reduce or increase instantaneously the power consumption in order to provide services to the AC grid, such as frequency regulation.
d) Controlling the load consumption in DC grid, the control point can enhance the AC grid stability during fast perturbations (e.g., faults, generators/lines disconnection).
e) Knowing the active power sensitivity to voltage, the control points can apply a voltage variation to redispatch the load consumption in DC grid. If different converters have different active power sensitivity to voltage, their power consumption under the same voltage variations is different.
f) The identification of the load behavior is done by using active and/or reactive power for varying the voltage and/or frequency in the electrical power supply grid for the sensitivity evaluation and the load control.
g) A grid forming converter carries out the identification of the load behavior by feeding in the one or more interference signals and/or by measuring an electrical characteristic data of the loads (5) and analyzing the load sensitivity.

Similarly to the AC grid, the active power load sensitivity to voltage can be analyzed in a DC grid (2 terminals or more). The control can be performed locally or by means of a central controller:
a) The grid forming converter can vary the voltage in the grid and measures the active power variation in the grid. The active power sensitivity to voltage can be evaluated in the DC grid.
b) Each converter (non grid forming) can evaluate the active power sensitivity to its terminal, varying the active power and measuring the voltage variation at its bus. The active power sensitivity can be evaluated at the converter bus.
c) All the converter are coordinated by means of a central controller and they apply a coordinated power variation at their own terminal. The voltage variation is sampled in a specific point of the grid (e.g., in one of the terminal) and the active power sensitivity to voltage is measured in that point. In any case, the active power sensitivity to voltage can be evaluated in any point of the grid, depending where the voltage is measured, included each terminal of the DC grid.

Accordingly, the method according to the invention and the developments of said method can be realized in the form of a computer program, that is to say in the form of software. The object mentioned at the outset is therefore also achieved by a computer program having program code means, designed to carry out a method of the kind explained above when the method is executed on a computer of a power electronics device which is connected to the power supply grid. The advantages explained at the outset can also be realized by said computer program.

The object mentioned at the outset is additionally achieved by a power electronics device of a power supply grid, having at least one computer and one memory in which a computer program of the kind specified above is stored, wherein the computer is designed to execute the computer program. The advantages explained at the outset can also be realized by said power electronics device.

The object mentioned at the outset is further achieved by a power supply grid having at least one power electronics device of the kind mentioned at the outset. The advantages explained above can also be realized by said power supply grid.

According to an advantageous development of the invention, it is proposed that the power supply grid has a central power electronics device or a plurality of power electronics devices which are distributed over the power supply grid. Comprehensive stabilization of even large power supply grids is ensured in this way. In particular, a power electronics device can be arranged at the transition between a medium-voltage supply grid and a low-voltage supply grid too.

According to an advantageous development of the invention, it is proposed that, when there are a plurality of power electronics devices, said power electronics devices have a data interface for data interchange between the power electronics devices, and the data interfaces are connected to one another for the purpose of data interchange, wherein superordinate coordination of the influencing functions of the individual power electronics devices is performed by means of the data interchange. The overall behavior of a plurality of distributed power electronics devices can be synchronized in this way. Therefore, the method is also suitable for large power supply grids with a large number of power electronics devices according to the invention.

The operating parameter of the power supply grid can be influenced by the power electronics device in a distributed manner locally or controlled by a central control unit. In the case of distributed control, the respective power electronics devices influence the operating partner locally at that point on the power supply grid at which they are connected to the power supply grid. In the case of central control, one or more power electronics devices can carry out the operating parameter at a specific, defined point on the power supply grid by actively and/or reactively varying the operating parameter, in particular the power, in a coordinated manner. In this case, it is advantageous to determine a load sensitivity variable in respect of this relevant point on the power supply grid with the method according to the invention.

The invention can be applied in an kind of power supply grids. In the following some differences in applications are explained for the use of the invention in low voltage (LV), medium voltage (MV) and high voltage (HV) grids:
a) Technologies to be used as control points, e.g. in the form of a power electronivs device:
   - LV grids: DG converter, Smart Transformer, LV converters.
   - MV and HV grids: power electronics-based solutions (e.g., STATCOM, DVR, SVC), synchronous and asynchronous generators, HVDC and MVDC AC terminals, back-to-back converters and doubly-fed induction generators or wind turbines.
b) Topology of the grid:
   - LV grids: radial, with one connection point to the main grid. The voltage is easily influenced by means of active and reactive power variation. The control points can vary the voltage with both active and reactive power variations.
   - HV grids: closed ring, with many connections with other HV grids. The voltage is not easily influenced and from it depends the power transfer in the grid. The control points can vary the voltage acting only with the reactive power variations. Active power variations do ont influence the voltage in HV grids.
c) Transients dynamics of the devices:
   - LV grids: small inertia devices with fast controllers integrated in the systems; time constants from tens to hundreds of milliseconds; the control points can vary rapidly the active and reactive power injection; changes in the voltage set-point lead to fast active and reactive power variation.
   - MV and HV grids: high inertia devices with time constants from hundreds of milliseconds to several seconds; the control point needs more time to influence the power consumption following a voltage change; if the active and reactive power is varied to modify the voltage, longer time windows must be considered for the identification algorithm.

The invention will be explained in greater detail below with reference to exemplary embodiments using drawings.

In the drawings,
- figure 1: is a schematic illustration of a power supply grid, and
- figure 2: is a schematic illustration of a further embodiment of a power supply grid, and
- figure 3: shows an operation of the power supply grid according to figure 2 with a change in the power consumption by connected loads, and
- figure 4: shows the power supply grid according to figure 1 with a change in the power consumption by connected loads, and
- figures 5 to 8: show further embodiments of power supply grids.

In the figures, identical reference symbols are used for elements which correspond to one another.

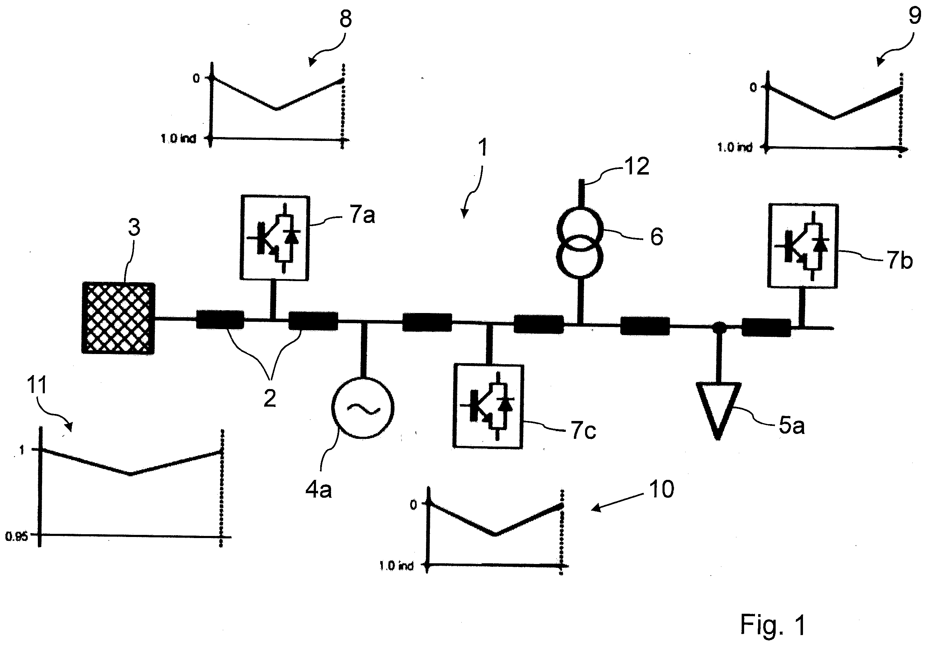

Figure 1 shows a power supply grid 1 having a large number of individual sections 2 and also a main supply grid 3 in the form of a medium-voltage supply grid. Here, the sections represented by blocks 2 in the figures constitute relatively large or relatively long line sections of the power supply grid. An industrial load 5a is connected to the power supply grid 1 as electrical load 5. Furthermore, a generator 4a is connected to the power supply grid 1 for feeding in energy. Furthermore, a low-voltage supply grid 12 is connected to the power supply grid 1 by means of a transformer device 6.

The power supply grid 1 has a plurality of power electronics devices 7 according to the invention in the form of the power electronics devices 7a, 7b and 7c. Said power electronics devices are connected to the power supply grid 1 at different points. The power electronics devices 7a, 7b, 7c each execute the method according to the invention, this being symbolized by the graphs 8, 9 and 10. In time graphs 8, 9, 10, the reactive power of the respective power electronics device 7a, 7b, 7c is indicated on the ordinate, and time is indicated on the abscissa. Graph 8 is associated with the power electronics device 7a, graph 9 is associated with the power electronics device 7b, and graph 10 is associated with the power electronics device 7c. A graph 11 which is associated with the main supply grid 3 is also illustrated. Said graph illustrates the voltage of the main supply grid 3 with respect to time. It can be seen that the power electronics devices 7a, 7b, 7c are designed in the form of control points on the power supply grid which feed in reactive power, which is variable over time, for changing the voltage at a respective point on the power supply grid, which point is influenced by means of the method according to the invention, this leading to the voltage profile in accordance with graph 11 in the main supply grid 3.

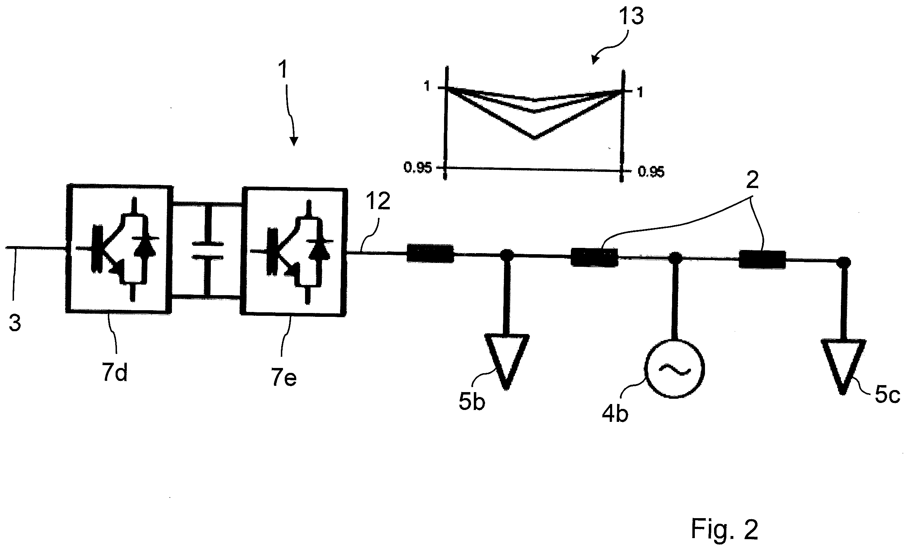

Figure 2 shows the use of second power electronics devices 7d, 7e in a power supply grid 1. The power electronics devices 7d, 7e form a common control point at the interface between a medium-voltage supply grid 3 and a low-voltage supply grid 12. A commercial load 5b and a load 5c of a private residence may be connected to the low-voltage supply grid 12 as loads 5. A distributed generator 4b is also connected to the low-voltage supply grid 12. Graph 13, in which the voltage of the low-voltage supply grid is indicated with respect to time, illustrates direct influencing of the voltage of the power supply grid. The setpoint voltage of the power supply grid is varied directly at the substation level. The active and the reactive power is measured.

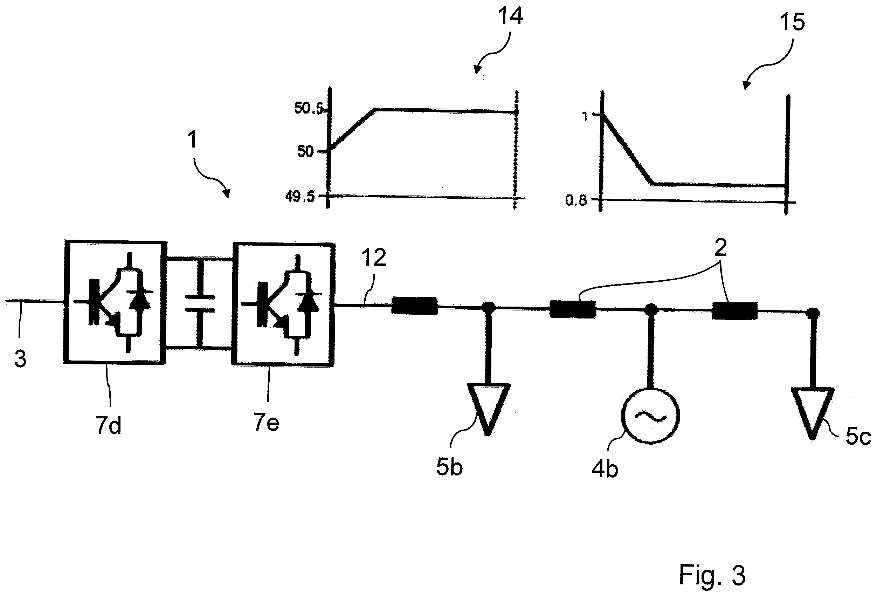

Figure 3 shows a further variant of the operation of the power supply grid 1 according to figure 2 using two graphs 14, 15. Graph 14 illustrates the frequency of the low-voltage supply grid 12 with respect to time; graph 15 illustrates the power of the low-voltage supply grid with respect to time. Figure 3 relates to the case of distributed power generation by the distributed generators 4b. Therefore, the control point with the power electronics 7d, 7e can increase the frequency in accordance with graph 14 and in the process interact with the control units of the distributed generators 4b. As a result of the increase in frequency, the distributed generators 4b reduce the power which is fed into the low-voltage supply grid 12, as shown in graph 15.

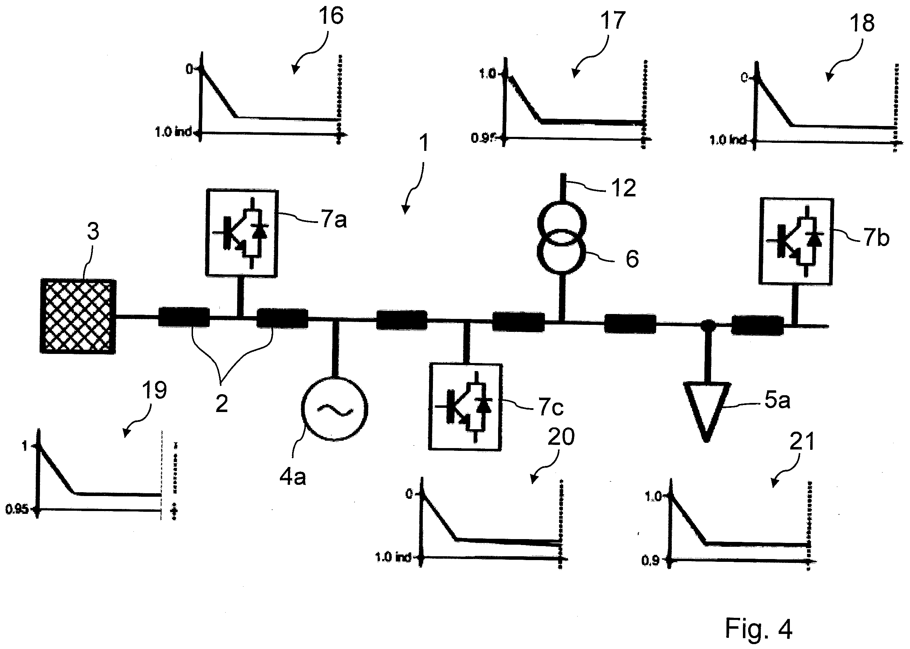

Figure 4 shows a further variant of the operation of the power supply grid 1 according to figure 1 with control of the power consumption by connected loads. In time graphs 16, 18, 20, the reactive power of the respective power electronics device 7a, 7b, 7c is indicated on the ordinate, and time is indicated on the abscissa. Graph 16 is associated with the power electronics device 7a, graph 18 is associated with the power electronics device 7b, and graph 20 is associated with the power electronics device 7c. Graph 19 which is associated with the main supply grid 3 is also illustrated. Said graph illustrates the voltage of the main supply grid 3 with respect to time. The active power of the low-voltage supply grid 12 with respect to time is illustrated in graph 17. The active power of the load 5a with respect to time is illustrated in graph 21.

The power electronics devices 7a, 7b, 7c reduce the reactive power which is fed in, this leading to a reduction in the voltage across the substations and accordingly reducing the power consumption by the load 5a (graph 21).

The value ranges on the ordinate axis in all of the graphs relate to a respective setpoint value of the operating parameter of the power supply grid, that is to say, for example, to the setpoint voltage or the setpoint frequency, that is to say standardized values are indicated.

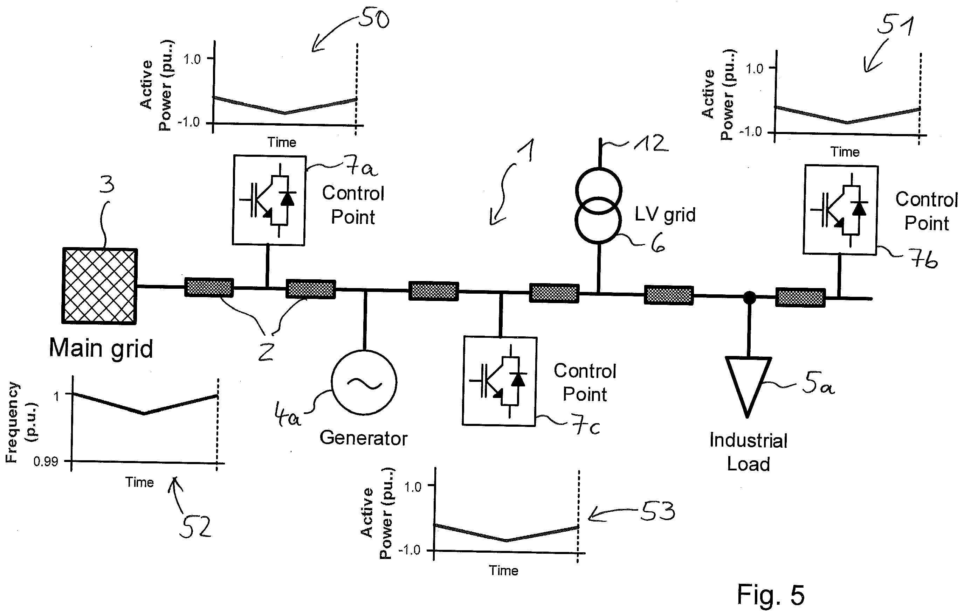

Figure 5 shows another embodiment of the grid 1 described with figure 1. In this case a central control case is applied. The control points constituted by the power electronics devices 7a, 7b, 7c are operated in a different way than in figure 1, namely for injecting active power for varying the frequency in a controlled point (main grid connection). In this case, graph 50 relates to power electronics device 7a, graph 51 relates to power control electronics device 7b and graph 53 relates to power electronics device 7c. Graph 52 relates to the main grid 3. In case of central control, the control points are able to influence the frequency in an interested point of the grid (e.g., substation bus) by means of coordinated active power variation. The sensitivity are calculated in that point, applying the coordinated active power variation and measuring the frequency.

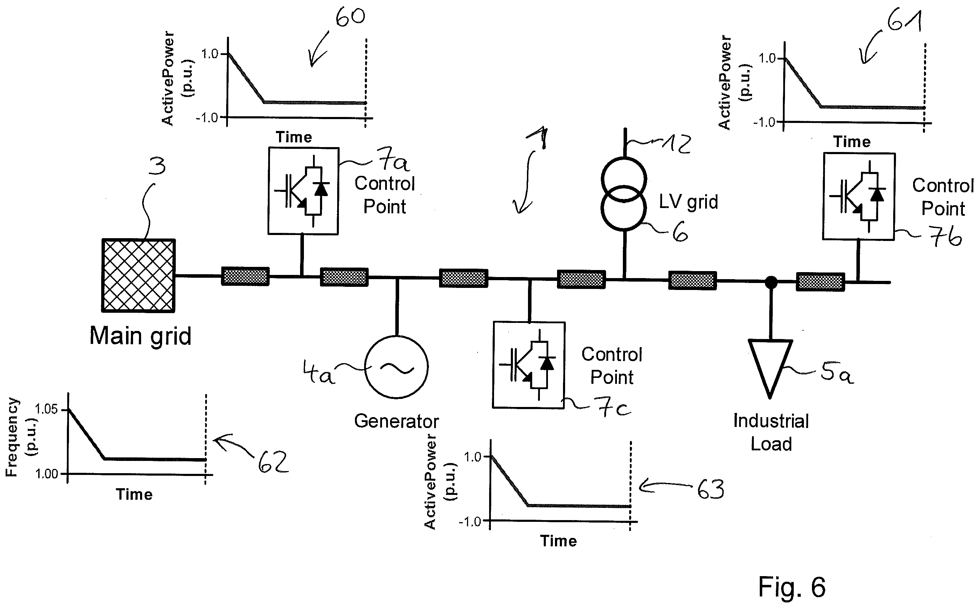

Figure 6 shows another embodiment of control in the grid explained with figure 1. Figure 6 shows another central control case. The control points in the grid vary their active power output from generation to consumtion for decreasing the frequency in a controlled point (main grid connection). Graph 60 relates to power electronics device 7a, graph 61 relates to power control electronics device 7b and graph 63 relates to power electronics device 7c. Graph 62 relates to the main grid 3. Being able to influence the frequency, the control points can change their power set-points (e.g., from generating power to absorbing power) in order to decrease the frequency in the grid. The control point can increase the power injection as well, in case of under-frequency events. This control can be applied in case of frequency deviation from the nominal value (e.g., over-frequency or under-frequency).

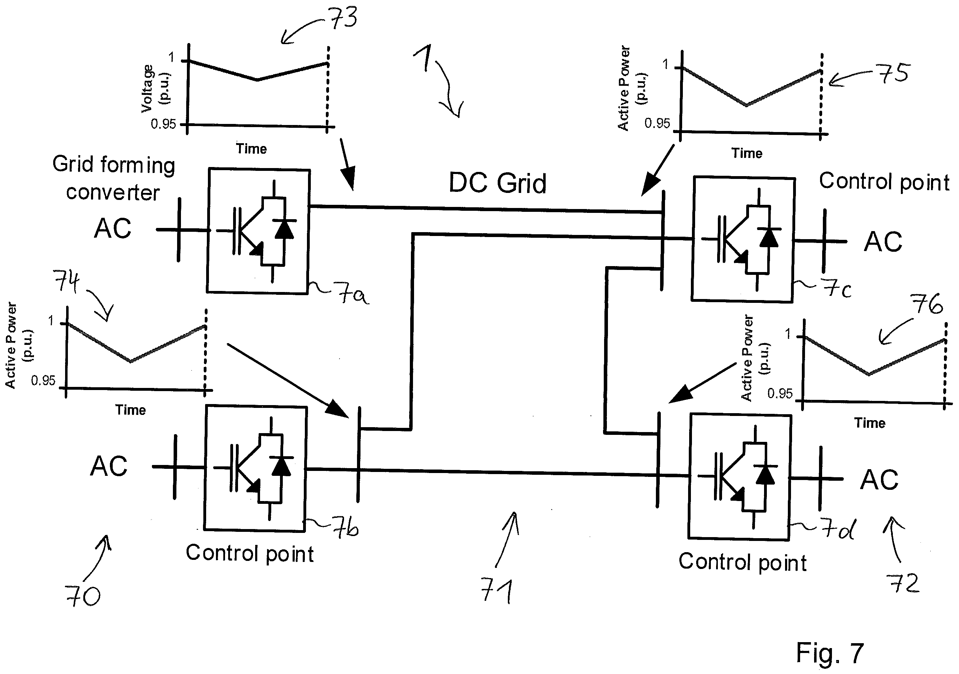

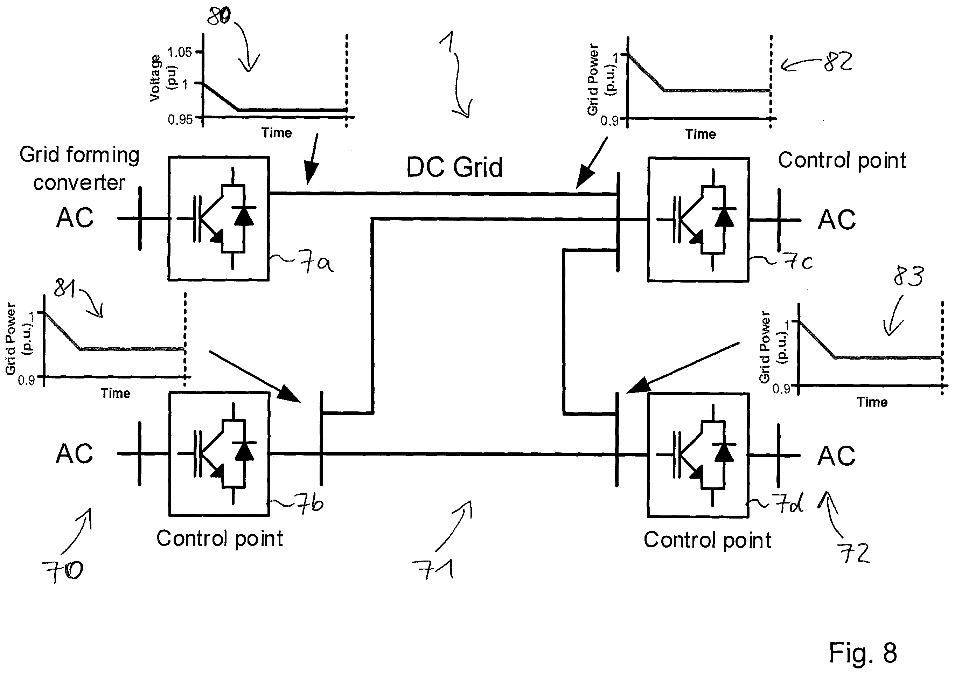

Figures 7 and 8 relate to a kind of electrical power supply grid 1 having a DC transmission grid 71, which connects two different AC grids 70, 72. The power electronics devices 7a, 7b, 7c, 7d may constitute control points of the load sensitivity measurement and the reactive services and/or may constitute grid forming converters.

Figure 7 shows another central control case. The control points in the grid inject active power to vary the voltage in a controlled point (voltage controlled converter). The graphs 74, 75, 76 show the active power over time in sections of the grid marked by the arrows. Graph 73 shows the voltage over time at the point marked by the arrow. Similarly to the AC grid, the active power load sensitivity to voltage can be analyzed in a DC grid (2 terminals or more). The control can be performed locally or by means of a central controller:
- The grid forming converter can vary the voltage in the grid and measures the active power variation in the grid. The active power sensitivity to voltage can be evaluated in the DC grid.
- Each converter (non grid forming) can evaluate the active power sensitivity to its terminal, varying the active power and measuring the voltage variation at its bus. The active power sensitivity can be evaluated at the converter bus.
- All the converters are coordinated by means of a central controller and they apply a coordinated power variation at their own terminal. The voltage variation is sampled in a specific point of the grid (e.g., in one of the terminal) and the active power sensitivity to voltage is measured in that point. In any case, the active power sensitivity to voltage can be evaluated in any point of the grid, depending where the voltage is measured, included each terminal of the DC grid.

Figure 8 shows another kind of control of the grid already explained with figure 7. In the case of figure 8, a different kind of control of the load consumption is done: by decreasing the voltage set point in the grid forming converter, the load power consumption is reduced in the other DC grids points. In other words, the power electronics device 7a reduces the voltage set point according to graph 80. Graphs 81, 82, 83 show the reduced load power consumption at the other points of the grid, namely at points close to power electronics devices 7b, 7c, 7d.

The information deriving from the load active power sensitivity to voltage can be used to provide ancillary services both in the DC and AC side:
- Being able to influence the load absorption in the DC grid, the control point can reduce or increase instantaneously the power consumption in order to provide services to the AC grid, such as frequency regulation.
- Controlling the load consumption in DC grid, the control point can enhance the AC grid stability during fast perturbations (e.g., faults, generators/lines disconnection).
- Knowing the active power sensitivity to voltage, the control points can apply a voltage variation to redispatch the load consumption in DC grid. If different converters have different active power sensitivity to voltage, their power consumption under the same voltage variation is different.

## Claims

1. A method for operating an electrical power supply grid (1), comprising at least the following steps which are executed on a power electronics device (7) which is connected to the power supply grid (1):
a) carrying out identification of a load behavior of electrical loads (5), which are connected to the power supply grid (1), during ongoing operation of the power supply grid (1) by deliberately feeding in one or more interference signals by means of the power electronics device (7),
b) measuring electrical characteristic data of the loads (5),
c) continuously determining at least one load sensitivity variable on the basis of the measured electrical characteristic data and the one or more interference signals which have been fed in, wherein the at least one load sensitivity variable is a variable which indicates how sensitively the power supply grid (1) reacts to voltage and/or frequency interference signals, such that the load behavior of the electrical loads which are connected to the power supply grid is determined permanently and in real-time during ongoing operation of the power supply grid (1) in a deliberate manner,
d) influencing at least one operating parameter of the power supply grid (1) on the basis of the determined load sensitivity variable, wherein
e) the identification of the load behavior is done by using active and/or reactive power for varying the voltage and/or frequency in the electrical power supply grid for the sensitivity evaluation and the load control, and
f) all of the following ancillary service functions are provided in the power supply grid (1) by means of the power electronics device (7), based on the ascertained load sensitivity variable:
f1) influencing the frequency of the power supply grid (1) depending on the voltage of the power supply grid (1),
f2) influencing the voltage of the power supply grid (1) depending on the frequency of the power supply grid (1)
f3) changing the power consumption by connected loads (5) of the power supply grid (1) by adjusting the voltage of the power supply grid (1) up to a predetermined limit value,
f4) changing the power of connected generators (4), which power has been fed into the power supply grid (1), by adjusting the voltage of the power supply grid (1) up to a predetermined limit value,
f5) changing the power consumption by the loads (5) of the power supply grid (1) by adjusting the frequency of the power supply grid up to a predetermined limit value,
f6) changing the power of said connected generators (4), which power has been fed into the power supply grid (1), by adjusting the frequency of the power supply grid (1) up to a predetermined limit value,
f7) temporarily influencing at least one operating parameter of the power supply grid (1) for the purpose of assisting the start-up phase or switch-off phase of at least one generator (4) which is connected to the power supply grid.

2. The method as claimed in the preceding claim, **characterized in that** the method is carried out in real time, and the determination of the load sensitivity variable is updated during ongoing operation of the power supply grid (1).

3. The method as claimed in either of the preceding claims, **characterized in that** the interference signal is a voltage interference signal, by way of which the instantaneous voltage of the power supply grid (1) is changed, and/or a frequency interference signal, by way of which the frequency of the power supply grid (1) is changed.

4. The method as claimed in one of the preceding claims, **characterized in that** the interference signal is repeatedly generated at regular and/or irregular intervals.

5. The method as claimed in one of the preceding claims, **characterized in that** the influenced operating parameter of the power supply grid (1) is the voltage and/or the frequency of the power supply grid (1) and/or the power consumption by loads (5) which are connected to the power supply grid (1) and/or the power of connected generators (4), which power has been fed into the power supply grid.

6. The method as claimed in one of the preceding claims, **characterized in that** the function of the power supply grid (1) and/or the at least one operating parameter and/or other operating parameters of the power supply grid (1) are/is stabilized at a respective setpoint value by influencing the at least one operating parameter of the power supply grid (1) on the basis of the ascertained load sensitivity variable.

7. The method as claimed in one of the preceding claims, **characterized in that**:
a) the electrical power supply grid is a medium voltage grid or high voltage grid, in particular a grid being or comprising a direct current (DC) grid,
b) the DC grid is a HVDC transmission grid between different alternating current (AC) grids,
c) influencing the load absorption in the DC grid, a control point reduces or increases instantaneously the power consumption in order to provide services to the AC grids, in particular a frequency regulation,
d) controlling the load consumption in the DC grid, the control point is configured to enhance the AC grid stability during fast perturbations,
e) knowing the active power sensitivity to voltage, the control point applies a voltage variation to redispatch the load consumption in the DC grid,
f) a grid forming converter carries out the identification of the load behavior by feeding in the one or more interference signals and/or by measuring the electrical characteristic data of the loads (5) and analyzing the load sensitivity.

8. A power electronics device (7) for a power supply grid (1), the power electronics device (7) being designed to carry out a method as claimed in one of the preceding claims.

9. A computer program comprising instructions to cause the power electronics device (7) of claim 8 to execute the steps of the method of claim 1.

10. A power supply grid (1) comprising at least one power electronics device (7) as claimed in the claim 8.

11. The power supply grid as claimed in the preceding claim, **characterized in that** the power supply grid (1) has a central power electronics device (7) or a plurality of power electronics devices (7) which are distributed over the power supply grid (1).

12. The power supply grid as claimed in the preceding claim, **characterized in that** each of the plurality of power electronics devices has a data interface for data interchange between the power electronics devices (7), and the data interfaces are connected to one another for the purpose of data interchange, wherein the power electronics devices are configured such that a superordinate coordination of influencing functions of the individual power electronics devices (7) is performed by means of the data interchange.

## Patentansprüche

1. Verfahren zum Betreiben eines elektrischen Stromversorgungsnetzes (1), das mindestens die folgenden Schritte umfasst, die an einer mit dem Stromversorgungsnetz (1) verbundenen Leistungselektronikvorrichtung (7) ausgeführt werden:
a) Durchführung einer Identifizierung eines Lastverhaltens von elektrischen Lasten (5), die mit dem Stromversorgungsnetz (1) verbunden sind, während des laufenden Betriebs des Stromversorgungsnetzes (1) durch gezielte Einspeisung eines oder mehrerer Störsignale mittels der Leistungselektronikvorrichtung (7),
b) Messen elektrischer Kenndaten der Lasten (5),
c) kontinuierliches Bestimmen mindestens einer Lastempfindlichkeitsgröße auf der Grundlage der gemessenen elektrischen Kenndaten und des einen oder der mehreren eingespeisten Störsignale, wobei die mindestens eine Lastempfindlichkeitsgröße eine Größe ist, die angibt, wie empfindlich das Stromversorgungsnetz (1) auf Spannungs- und/oder Frequenzstörsignale reagiert, sodass das Lastverhalten der an das Stromversorgungsnetz angeschlossenen elektrischen Lasten während des laufenden Betriebs des Stromversorgungsnetzes (1) dauerhaft und in Echtzeit gezielt ermittelt wird,
d) Beeinflussen mindestens eines Betriebsparameters des Stromversorgungsnetzes (1) auf der Grundlage der ermittelten Lastempfindlichkeitsgröße, wobei
e) die Ermittlung des Lastverhaltens unter Verwendung von Wirk- und/oder Blindleistung zur Veränderung der Spannung und/oder Frequenz im elektrischen Stromversorgungsnetz für die Empfindlichkeitsbewertung und die Laststeuerung erfolgt, und
f) alle folgenden Zusatzdienstfunktionen werden im Stromversorgungsnetz (1) mittels der Leistungselektronikvorrichtung (7) auf der Grundlage der ermittelten Lastempfindlichkeitsgröße bereitgestellt:
f1) Beeinflussung der Frequenz des Stromversorgungsnetzes (1) in Abhängigkeit von der Spannung des Stromversorgungsnetzes (1),
f2) Beeinflussung der Spannung des Stromversorgungsnetzes (1) in Abhängigkeit von der Frequenz des Stromversorgungsnetzes (1)
f3) Ändern des Stromverbrauchs durch angeschlossene Lasten (5) des Stromversorgungsnetzes (1) durch Einstellen der Spannung des Stromversorgungsnetzes (1) bis zu einem vorgegebenen Grenzwert,
f4) Ändern der Leistung von angeschlossenen Generatoren (4), deren Leistung in das Stromversorgungsnetz (1) eingespeist wurde, durch Einstellen der Spannung des Stromversorgungsnetzes (1) auf einen vorbestimmten Grenzwert,
f5) Ändern des Stromverbrauchs durch die Lasten (5) des Stromversorgungsnetzes (1) durch Einstellen der Frequenz des Stromversorgungsnetzes auf einen vorgegebenen Grenzwert,
f6) Ändern der Leistung der angeschlossenen Generatoren (4), deren Leistung in das Stromversorgungsnetz (1) eingespeist wurde, durch Einstellen der Frequenz des Stromversorgungsnetzes (1) auf einen vorgegebenen Grenzwert,
f7) vorübergehendes Beeinflussen mindestens eines Betriebsparameters des Stromversorgungsnetzes (1) zum Zwecke der Unterstützung der Startphase oder Abschaltphase mindestens eines Generators (4), der an das Stromversorgungsnetz angeschlossen ist.

2. Verfahren nach dem vorstehenden Anspruch, **dadurch gekennzeichnet, dass** das Verfahren in Echtzeit durchgeführt wird und die Bestimmung der Lastempfindlichkeitsgröße während des laufenden Betriebs des Stromversorgungsnetzes (1) aktualisiert wird.

3. Verfahren nach einem der vorstehenden Ansprüche, **dadurch gekennzeichnet, dass** das Störsignal ein Spannungsstörsignal ist, durch das die Momentanspannung des Stromversorgungsnetzes (1) verändert wird, und/oder ein Frequenzstörsignal ist, durch das die Frequenz des Stromversorgungsnetzes (1) verändert wird.

4. Verfahren nach einem der vorstehenden Ansprüche, **dadurch gekennzeichnet, dass** das Störsignal in regelmäßigen und/oder unregelmäßigen Abständen wiederholt erzeugt wird.

5. Verfahren nach einem der vorstehenden Ansprüche, **dadurch gekennzeichnet, dass** der beeinflusste Betriebsparameter des Stromversorgungsnetzes (1) die Spannung und/oder die Frequenz des Stromversorgungsnetzes (1) und/oder die Leistungsaufnahme von Lasten (5), die an das Stromversorgungsnetz (1) angeschlossen sind, und/oder die Leistung von angeschlossenen Generatoren (4) ist, deren Leistung in das Stromversorgungsnetz eingespeist wurde.

6. Verfahren nach einem der vorstehenden Ansprüche, **dadurch gekennzeichnet, dass** die Funktion des Stromversorgungsnetzes (1) und/oder der mindestens eine Betriebsparameter und/oder andere Betriebsparameter des Stromversorgungsnetzes (1) durch Beeinflussung des mindestens einen Betriebsparameters des Stromversorgungsnetzes (1) auf der Grundlage der ermittelten Lastempfindlichkeitsgröße auf einen jeweiligen Sollwert stabilisiert werden.

7. Verfahren nach einem der vorstehenden Ansprüche, **dadurch gekennzeichnet, dass**:
a) das elektrische Versorgungsnetz ein Mittelspannungsnetz oder Hochspannungsnetz ist, insbesondere ein Netz, das ein Gleichstromnetz (DC-Netz) ist oder umfasst,
b) das Gleichstromnetz ein HGÜ-Übertragungsnetz zwischen verschiedenen Wechselstromnetzen ist,
c) zur Beeinflussung der Lastaufnahme im Gleichstromnetz ein Steuerpunkt den Stromverbrauch sofort reduziert oder erhöht, um Dienste für die Wechselstromnetze bereitzustellen, insbesondere eine Frequenzregelung,
d) zur Steuerung des Lastverbrauchs im Gleichstromnetz ist der Kontrollpunkt so konfiguriert, dass er die Stabilität des Wechselstromnetzes bei schnellen Störungen verbessert,
e) bei Kenntnis der Empfindlichkeit der Wirkleistung gegenüber Spannung, wendet der Kontrollpunkt eine Spannungsänderung an, um den Lastverbrauch im Gleichstromnetz neu zu verteilen.
f) ein netzbildender Umrichter die Identifizierung des Lastverhaltens durchführt, indem er ein oder mehrere Störsignale einspeist und/oder die elektrischen Kenndaten der Lasten (5) misst und die Lastempfindlichkeit analysiert.

8. Leistungselektronikvorrichtung (7) für ein Stromversorgungsnetz (1), wobei die leistungselektronische Vorrichtung (7) dazu ausgelegt ist, ein Verfahren gemäß einem der vorstehenden Ansprüche durchzuführen.

9. Ein Computerprogramm, das Anweisungen umfasst, um die Leistungselektronikvorrichtung (7) gemäß Anspruch 8 zu veranlassen, die Schritte des Verfahrens gemäß Anspruch 1 auszuführen.

10. Stromversorgungsnetz (1) mit mindestens einer Leistungselektronikvorrichtung (7) gemäß Anspruch 8.

11. Das Stromversorgungsnetz gemäß dem vorstehenden Anspruch, **dadurch gekennzeichnet, dass** das Stromversorgungsnetz (1) eine zentrale Leistungselektronikvorrichtung (7) oder mehrere Leistungselektronikvorrichtungen (7) aufweist, die über das Stromversorgungsnetz (1) verteilt sind.

12. Das Stromversorgungsnetz nach dem vorstehenden Anspruch, **dadurch gekennzeichnet, dass** jede der mehreren Leistungselektronikvorrichtungen eine Datenschnittstelle für den Datenaustausch zwischen den Leistungselektronikvorrichtungen (7) aufweist und die Datenschnittstellen zum Zwecke des Datenaustauschs miteinander verbunden sind, wobei die Leistungselektronikvorrichtungen so konfiguriert sind, dass eine übergeordnete Koordinierung von Funktionen der einzelnen Leistungselektronikvorrichtungen (7) mittels des Datenaustauschs durchgeführt wird.

## Revendications

1. Procédé de fonctionnement d'un réseau d'alimentation de puissance électrique (1), comprenant au moins les étapes suivantes qui sont exécutées sur un dispositif électronique de puissance (7) qui est connecté au réseau d'alimentation de puissance (1) :
a) mettre en œuvre une identification d'un comportement de charge de charges électriques (5), qui sont connectées au réseau d'alimentation de puissance (1), pendant un fonctionnement continu du réseau d'alimentation de puissance (1) en alimentant délibérément un ou plusieurs signaux d'interférence au moyen du dispositif électronique de puissance (7),
b) mesurer des données caractéristiques électriques des charges (5),
c) déterminer en continu au moins une variable de sensibilité de charge sur la base des données caractéristiques électriques mesurées et desdits un ou plusieurs signaux d'interférence qui ont été alimentés, ladite au moins une variable de sensibilité de charge étant une variable qui indique la sensibilité avec laquelle le réseau d'alimentation de puissance (1) réagit à une tension et/ou à des signaux d'interférence de fréquence, de telle sorte que le comportement de charge des charges électriques qui sont connectées au réseau d'alimentation de puissance est déterminé en permanence et en temps réel pendant un fonctionnement continu du réseau d'alimentation de puissance (1) d'une manière délibérée,
d) influencer au moins un paramètre de fonctionnement du réseau d'alimentation de puissance (1) sur la base de la variable de sensibilité de charge déterminée, dans lequel
e) l'identification du comportement de charge est effectuée à l'aide d'une puissance active et/ou réactive permettant une variation de la tension et/ou de la fréquence dans le réseau d'alimentation de puissance électrique pour l'évaluation de la sensibilité et la commande de charge, et
f) toutes les fonctions de service auxiliaires suivantes sont assurées dans le réseau d'alimentation de puissance (1) au moyen du dispositif électronique de puissance (7), sur la base de la variable de sensibilité de charge établie :
f1) influencer la fréquence du réseau d'alimentation de puissance (1) en fonction de la tension du réseau d'alimentation de puissance (1),
f2) influencer la tension du réseau d'alimentation de puissance (1) en fonction de la fréquence du réseau d'alimentation de puissance (1),
f3) changer la consommation de puissance par l'intermédiaire de charges connectées (5) du réseau d'alimentation de puissance (1) en ajustant la tension du réseau d'alimentation de puissance (1) jusqu'à une valeur limite prédéterminée,
f4) changer la puissance de générateurs connectés (4), ladite puissance ayant été alimentée dans le réseau d'alimentation de puissance (1), en ajustant la tension du réseau d'alimentation de puissance (1) jusqu'à une valeur limite prédéterminée,
f5) changer la consommation de puissance par l'intermédiaire des charges (5) du réseau d'alimentation de puissance (1) en ajustant la fréquence du réseau d'alimentation de puissance jusqu'à une valeur limite prédéterminée,
f6) changer la puissance desdits générateurs connectés (4), ladite puissance ayant été alimentée dans le réseau d'alimentation de puissance (1), en ajustant la fréquence du réseau d'alimentation de puissance (1) jusqu'à une valeur limite prédéterminée,
f7) influencer temporairement au moins un paramètre de fonctionnement du réseau d'alimentation de puissance (1) à des fins d'assistance à la phase de démarrage ou à la phase d'arrêt d'au moins un générateur (4) qui est connecté au réseau d'alimentation de puissance.

2. Procédé selon la revendication précédente, **caractérisé en ce que** le procédé est mis en œuvre en temps réel, et **en ce que** la détermination de la variable sensibilité de charge est mise à jour pendant un fonctionnement continu du réseau d'alimentation de puissance (1).

3. Procédé selon l'une ou l'autre des revendications précédentes,
**caractérisé en ce que** le signal d'interférence est un signal d'interférence de tension au moyen duquel la tension instantanée du réseau d'alimentation de puissance (1) est changée, et/ou un signal d'interférence de fréquence au moyen duquel la fréquence du réseau d'alimentation de puissance (1) est changée.

4. Procédé selon l'une des revendications précédentes, **caractérisé en ce que** le signal d'interférence est généré de manière répétée à intervalles réguliers et/ou irréguliers.

5. Procédé selon l'une des revendications précédentes, **caractérisé en ce que** le paramètre de fonctionnement influencé du réseau d'alimentation de puissance (1) est la tension et/ou la fréquence du réseau d'alimentation de puissance (1) et/ou la consommation de puissance par l'intermédiaire de charges (5) qui sont connectées au réseau d'alimentation de puissance (1) et/ou la puissance de générateurs connectés (4) dont la puissance a été alimentée dans le réseau d'alimentation de puissance.

6. Procédé selon l'une des revendications précédentes, **caractérisé en ce que** la fonction du réseau d'alimentation de puissance (1) et/ou ledit au moins un paramètre de fonctionnement et/ou d'autres paramètres de fonctionnement du réseau d'alimentation de puissance (1) sont stabilisés à une valeur de consigne respective en influençant ledit au moins un paramètre de fonctionnement du réseau d'alimentation de puissance (1) sur la base de la variable de sensibilité de charge établie.

7. Procédé selon l'une des revendications précédentes, **caractérisé en ce que** :
a) le réseau d'alimentation de puissance électrique est un réseau moyenne tension ou haute tension, en particulier un réseau qui est ou qui comprend un réseau en courant continu (CC),
b) le réseau CC est un réseau à transmission CCHT entre différents réseaux en courant alternatif (CA),
c) en influençant l'absorption de charge dans le réseau CC, un point de commande réduit ou augmente instantanément la consommation de puissance afin de fournir des services aux réseau CA, en particulier une régulation de fréquence,
d) en commandant la consommation de charge dans le réseau CC, le point de commande est configuré pour améliorer la stabilité de réseau CA lors de perturbations rapides,
e) en connaissant la sensibilité de puissance active à la tension, le point de commande applique une variation de tension pour redispatcher la consommation de charge dans le réseau CC,
f) un convertisseur formateur de réseau met en œuvre l'identification du comportement de charge en alimentant lesdits un ou plusieurs signaux d'interférence et/ou en mesurant les données caractéristiques électriques des charges (5) et en analysant la sensibilité de charge.

8. Dispositif électronique de puissance (7) destiné à un réseau d'alimentation de puissance (1), le dispositif électronique de puissance (7) étant conçu pour mettre en œuvre un procédé selon l'une des revendications précédentes.

9. Programme d'ordinateur comprenant des instructions pour amener le dispositif électronique de puissance (7) selon la revendication 8 à exécuter les étapes du procédé selon la revendication 1.

10. Réseau d'alimentation de puissance (1) comprenant au moins un dispositif électronique de puissance (7) selon la revendication 8.

11. Réseau d'alimentation de puissance selon la revendication précédente, **caractérisé en ce que** le réseau d'alimentation de puissance (1) a un dispositif électronique de puissance central (7) ou une pluralité de dispositifs électroniques de puissance (7) qui sont distribués sur le réseau d'alimentation de puissance (1).

12. Réseau d'alimentation de puissance selon la revendication précédente, **caractérisé en ce que** chacun de la pluralité de dispositifs électroniques de puissance a une interface de données pour un échange de données entre les dispositifs électroniques de puissance (7), et les interfaces de données sont connectées les unes aux autres aux fins d'échange de données, les dispositifs électroniques de puissance étant configurés de telle sorte qu'une coordination supérieure de fonctions d'influence des dispositifs électroniques de puissance individuels (7) est effectuée au moyen de l'échange de données.
